# EUROPEAN PATENT SPECIFICATION

(11) **EP 2 856 457 B1**
(45) Date of publication and mention of the grant of the patent: **12.02.2020**
(21) Application number: 13731546.1
(22) Date of filing: 31.05.2013
(51) Int. Cl.: G09B 19/00

(54) **METHOD AND APPARATUS FOR INDICATING SWING TEMPO**
VERFAHREN UND VORRICHTUNG ZUR ANZEIGE EINES SCHWUNGTEMPOS
PROCÉDÉ ET APPAREIL PERMETTANT D'INDIQUER UN RYTHME DE SWING

(30) Priority: 31.05.2012 US 201213485436
(43) Date of publication of application: 08.04.2015
(73) Proprietor: Karsten Manufacturing Corporation, Phoenix, AZ 85029 (US)
(72) Inventor: STITES, John, T., Beaverton, OR 97005 (US)
(74) Representative: Simpson, Kirsty Mairi
(86) International application number: PCT/US2013/043654
(87) International publication number: WO 2013/181560

(56) References cited:
- EP-A2- 1 703 488
- US-A- 5 655 223
- US-A- 5 743 807
- US-A1- 2002 150 873
- US-A1- 2004 033 843
- US-A1- 2004 214 649
- US-A1- 2005 196 738
- US-A1- 2006 105 853
- US-A1- 2011 230 274
- US-A1- 2012 108 351
- US-B1- 6 224 386
- US-B1- 6 935 965
- Anonymous: "Improving Your Golf Swing Tempo And Timing", , 1 February 2001 (2001-02-01), XP055586541, Retrieved from the Internet: URL:https://www.golfproductnews.com/golf-s wing-tempo-rhythm-timing/ [retrieved on 2019-05-07]

## Description

### TECHNICAL FIELD

The invention relates generally to systems, methods, and devices for indicating swing tempo to a user. Certain aspects of this invention relate to tempo indicating devices that can be used in connection with articles of golf equipment or other athletic equipment, and in particular with a golf glove, and may be connected to such equipment.

### BACKGROUND

Golfers at all skill levels seek to improve their performance, lower their golf scores, and reach that next performance "level." Manufacturers of all types of golf equipment have responded to these demands, and recent years have seen dramatic changes and improvements in golf equipment. However, despite the various technological improvements, golf remains a difficult game to play at a high level. Accordingly, a need exists for golf equipment that includes features that can assist in improving a user's golf swing and other aspects of the game.

One aspect that can greatly affect a golf swing is the speed of the swing itself. Swings that are too slow can result in less energy transfer to the ball, and swings that are too fast may cause the golfer to lose control and consistency in the swing. The "tempo" of the swing, or in other words the timing of the backswing and forward swing, can also have a profound effect on the speed and consistency of the swing, as well as other aspects of the swing. Many golfers have poor and/or inconsistent rhythm, which can lead to poor shots and inconsistent play. Accordingly, a need exists for technologies that can assist a golfer in developing a consistent rhythm.

Additionally, different golfers may have different optimum swing tempos, and a single golfer may even have different optimum swing tempos for different clubs. For example, a golfer may have one optimum swing tempo for a driver or other wood club, another for long irons, another for short irons, and another for putting. However, it can be difficult for a golfer to determine his/her optimum swing tempo(s), and it can additionally be difficult for a golfer to maintain the optimum swing tempo(s) during practice and/or play. US 2004/214649 discloses a golf swing-training device for enabling golfers to maintain a preferred tempo for their golf club swings and comprises a small, lightweight, electromechanical golfers' aide for generating physical vibration patterns. The aide is contained in a housing that transmits the physical vibrations to the golfer. The housing comprises a cavity and/or tubular case in the grip portion of a golf club. Such as case may be removable from one club to another or may be carried in the hand or pocket of the golfer. Upon command, the golfers' aide generates the physical vibration patterns. The physical vibration patterns may be factory set or of user adjustable time duration and are physically sensed by the golfer as being indicative of a preferred golf club swing tempo for the golfer comprising a preferred back swing duration, upper club pause time, and preferred club downswing and follow through duration.

US 5 655 223 discloses a golf training glove for emitting distinctive physically perceivable signals in response to a failure of a golfer to maintain a correct grip about a golf club during a golf swing.

Accordingly, a need exists for technologies that can assist a golfer in determining an optimum swing tempo and for conforming his/her swing to a selected swing tempo.

The present devices and methods are provided to address at least some of the problems discussed above and other problems, and to provide advantages and aspects not provided by prior golf equipment. A full discussion of the features and advantages of the present invention is deferred to the following detailed description, which proceeds with reference to the accompanying drawings.

### BRIEF SUMMARY

The following presents a general summary of aspects of the invention in order to provide a basic understanding of the invention. This summary is not an extensive overview of the invention. It is not intended to identify key or critical elements of the invention or to delineate the scope of the invention. The following summary merely presents some concepts of the invention in a general form as a prelude to the more detailed description provided below. The claimed invention is defined in independent claim 1.

Aspects of the invention relate to a system that includes an article of golf equipment, and in particular a golf glove, configured to be worn by a user during golf play and a tempo indicating device connected to the article, which is configured for emitting a rhythm that is detectable by the user. The tempo indicating device may include a contact portion configured for emitting a tactile rhythm to the user that is detectable by the user through sense of touch.

According to one aspect which is not part of the claimed invention, the article of golf equipment may be a golf club, a hat, a golf glove, a belt, a shirt, a shoe, an armband, and/or a wristwatch. For example, the article may be a golf club having a shaft and a club head, and the tempo indicating device can be connected to the shaft of the golf club. As another example, the article may be a golf glove having a shell defining a hand receiving portion and a plurality of finger receiving portions and a receiver connected to the golf glove, and the tempo indicating device may be at least partially received within the receiver. As a further example, the article may be a hat having an opening for receiving a head of the user, and the tempo indicating device may be connected to the hat proximate an edge defining the opening. The hat may also have a flap connected to the edge and extending away from the edge, such that the tempo indicating device is connected to the flap.

According to another aspect, the system may include a control interface in communication with the tempo indicating device and configured to receive user input and transmit a signal to control a tempo of the tactile rhythm of the tempo indicating device, such that the tempo of the tactile rhythm is variable by control of the user. For example, the control interface may be located on or embodied by a wristwatch adapted to be worn by the user, with the wristwatch having a communication interface configured for transmitting and receiving signals to and from the tempo indicating device. As another example, the control interface may be located on or embodied by a portable electronic device adapted to be carried by the user, the portable electronic device having a communication interface configured for transmitting and receiving signals to and from the tempo indicating device. As a further example, the tempo indicating device may include a housing having the contact portion located thereon, wherein the control interface is at least partially received and/or supported by the housing.

Additional aspects of the invention relate to a system that includes an article of golf equipment, and in particular a golf glove, configured to be worn by a user during golf play, a tempo indicating device connected to the article, and a remote control device in wireless communication with the tempo indicating device. The tempo indicating device includes a rhythm indicator configured for emitting a rhythm that is detectable by the user. The remote control device is configured to receive user input and transmit a wireless signal to control a tempo of the rhythm of the tempo indicating device, such that the tempo of the rhythm is variable by control of the user.

According to one aspect, the remote control device may be located on or embodied by a wristwatch or other portable electronic device adapted to be carried by the user. The portable electronic device may have a memory storing an application configured for accepting user input to control the tempo indicating device and a processor configured for executing the computer-executable instructions to transmit the wireless signal to the tempo indicating device.

The invention relates to a golf glove including a shell defining a hand-receiving portion and a plurality of finger-receiving portions, and a receiver connected to the shell and defining a cavity, and a tempo indicating device connected to the glove and being at least partially received in the receiver. The tempo indicating device includes a contact portion adapted for emitting a tactile rhythm to the user that is detectable by the user through sense of touch.

According to one aspect, the golf glove further has a flap extending from the shell and configured to be releasably connected to a connecting portion of the shell to retain the golf glove on the user's hand, where the receiver is positioned on the connecting portion.

According to another aspect, the tempo indicating device includes a housing having the contact portion thereon and a powered movement mechanism at least partially contained within the housing and configured to emit the tactile rhythm through the contact portion. The tempo indicating device may further include a control interface at least partially supported by the housing, with the control interface configured to receive user input to control a tempo of the tactile rhythm of the tempo indicating device.

According to a further aspect, the contact portion of the tempo indicating device may be positioned in contact with the shell, where the contact portion is configured to emit the tactile rhythm to the user through the shell. Alternately, the contact portion of the tempo indicating device may be exposed to the hand receiving portion, such that the contact portion is configured to contact a hand of a user directly when the hand is received in the hand receiving portion.

Additional aspects of the invention relate to an electronic device that includes a memory storing computer-executable instructions and a processor in communication with the memory. The processor is configured to execute the computer-executable instructions to perform a number of actions. The device (e.g. the processor) receives an input of a specified tempo and identifies an audio file storing a song having a musical tempo that corresponds to the specified tempo. The audio file is then processed to transmit a signal configured to cause an audio speaker to play the song to be audible to a user. A plurality of audio files may be identified, which store songs each having a musical tempo that corresponds to the specified tempo. The plurality of audio files may be processed to transmit a signal configured to cause the audio speaker to play the songs stored in the audio files, to be audible to a user. This processing may include storing a playlist containing the plurality of audio files for later playback.

According to one aspect, the audio file is identified by searching a plurality of audio files storing songs having different musical tempos to identify the audio file.

According to another aspect, the musical tempo of the song of the identified audio file may be substantially equal to the specified tempo, or may be equal or substantially equal to an integer multiple of the specified tempo.

Other features and advantages of the invention will be apparent from the following description taken in conjunction with the attached drawings.

### BRIEF DESCRIPTION OF THE DRAWINGS

To allow for a more full understanding of the present invention, it will now be described by way of example, with reference to the accompanying drawings in which:
FIG. 1 is a schematic view of an illustrative embodiment of a tempo indicating device according to aspects of the present invention;
FIG. 2 is a perspective view of an illustrative embodiment of a golf glove having a tempo indicating device, according to aspects of the present invention;
FIG. 3 is a plan view of the golf glove of FIG. 1, with the hand of a user received therein, during use in gripping a golf club;
FIG. 3A is a cross-sectional view of a portion of the golf glove and the tempo indicating device of FIG. 2;
FIG. 4 is a top perspective view of the tempo indicating device of FIG. 2;
FIG. 5 is a bottom perspective view of the tempo indicating device of FIG. 4;
FIG. 6 is a perspective view of an illustrative embodiment of a wristwatch having a tempo indicating device, according to aspects of the present invention;
FIG. 7 is a perspective view of an illustrative embodiment of an audio earpiece having a tempo indicating device, according to aspects of the present invention;
FIG. 8 is a perspective view of an illustrative embodiment of a shirt and a tempo indicating device releasably connected to the shirt, according to aspects of the present invention;
FIG. 9 is a side view of the tempo indicating device of FIG. 8;
FIG. 10 is a perspective view of an illustrative embodiment of an article of footwear having a tempo indicating device, according to aspects of the present invention;
FIG. 11 is a perspective view of an illustrative embodiment of a hat having a tempo indicating device, according to aspects of the present invention;
FIG. 12 is a perspective view of another illustrative embodiment of a hat having a tempo indicating device, according to aspects of the present invention;
FIG. 13 is a perspective view of an illustrative embodiment of an armband having a tempo indicating device, according to aspects of the present invention;
FIG. 14 is a perspective view of an illustrative embodiment of a belt having a tempo indicating device, according to aspects of the present invention;
FIG. 15 is a perspective view of an illustrative embodiment of a shaft of a golf club having a tempo indicating device, according to aspects of the present invention;
FIG. 16 is a schematic view of a golfer wearing a golf glove having a tempo indicating device and further carrying a portable electronic device in communication with the tempo indicating device, in preparation for beginning a golf swing, according to aspects of the present invention;
FIG. 17 is a schematic view of the golfer of FIG. 16, as the golfer begins his backswing, according to aspects of the present invention;
FIG. 18 is a schematic view of the golfer of FIG. 16, as the golfer has reached the top of his backswing and is about to begin his forward swing, according to aspects of the present invention;
FIG. 19 is a schematic view of the golfer of FIG. 16, as the golfer has completed his forward swing, according to aspects of the present invention;
FIG. 20 is a schematic view of one embodiment of an electronic device according to aspects of the present invention;
FIG. 21 is a schematic view of another embodiment of an electronic device in communication with an audio device, according to aspects of the present invention;
FIG. 22 is a schematic view of a golfer wearing a golf glove having a tempo indicating device and further carrying a portable electronic device in communication with the tempo indicating device, in preparation for beginning a golf swing, and a remote electronic device in communication with the portable electronic device and the tempo indicating device, according to aspects of the present invention; and
FIG. 23 is a schematic view of a golfer wearing a golf glove having a tempo indicating device, using a golf club having another tempo indicating device, and further carrying a portable electronic device in communication with both of the tempo indicating devices, in preparation for beginning a golf swing, according to aspects of the present invention.

### DETAILED DESCRIPTION

In the following description of various example structures according to the invention, reference is made to the accompanying drawings, which form a part hereof, and in which are shown by way of illustration various example devices, systems, and environments in which aspects of the invention may be practiced. It is to be understood that other specific arrangements of parts, example devices, systems, and environments may be utilized and structural and functional modifications may be made without departing from the scope of the present invention. Also, while the terms "top," "bottom," "front," "back," "side," "rear," and the like may be used in this specification to describe various example features and elements of the invention, these terms are used herein as a matter of convenience, e.g., based on the example orientations shown in the figures or the orientation during typical use. Additionally, the term "plurality," as used herein, indicates any number greater than one, either disjunctively or conjunctively, as necessary, up to an infinite number. Nothing in this specification should be construed as requiring a specific three dimensional orientation of structures in order to fall within the scope of this invention. Also, the reader is advised that the attached drawings are not necessarily drawn to scale.

The following terms are used in this specification, and unless otherwise noted or clear from the context, these terms have the meanings provided below.

"Ball striking device" means any device constructed and designed to strike a ball or other similar objects (such as a hockey puck). In addition to generically encompassing "ball striking heads," which are described in more detail below, examples of "ball striking devices" include, but are not limited to: golf clubs, putters, croquet mallets, polo mallets, baseball or softball bats, cricket bats, tennis rackets, badminton rackets, field hockey sticks, ice hockey sticks, and the like.

"Ball striking head" means the portion of a "ball striking device" that includes and is located immediately adjacent (optionally surrounding) the portion of the ball striking device designed to contact the ball (or other object) in use. In some examples, such as many golf clubs and putters, the ball striking head may be a separate and independent entity from any shaft or handle member, and it may be attached to the shaft or handle in some manner.

The terms "shaft" and "handle" are used synonymously and interchangeably in this specification, and they include the portion of a ball striking device (if any) that the user holds during a swing of a ball striking device.

"Substantially equal" means that two measured values are within 5% of each other.

In general, aspects of this invention relate to a tempo indicating device that can be utilized in connection with golf equipment and other athletic equipment, which may include any equipment that a user may utilize, wear, or carry during an athletic situation or that may otherwise affect the user's experience in the athletic situation, such as a golf glove. Alternative examples which are not part of the claimed invention and which are retained for explanation purposes may include golf clubs, golf bags, golf balls, carts or other motorized equipment, cleaning equipment, tools such as divot repair tools, markers, ball retrievers, etc., electronic devices, and various articles of clothing, such as shirts, pants, shoes or other footwear, socks, undergarments, hats, belts, armbands or wristbands, etc., as well as other types of golf equipment.

A tempo indicating device may be any device that emits a sequence of regular, metrical beats to a user, also referred to as a rhythm, in a format that is recognizable to the user. For example, the format for emitting the rhythm may include: audio, visual, and/or tactile, such as a vibrating or pulsing tactile device, an optical device (e.g. LED or other light) that blinks, changes color, etc., an audio device that may emit a rhythmic sound, such as ticks, beeps, etc., or music or other audio effects that may contain rhythmic properties. The tempo indicating device may be adjustable and/or controllable to change the tempo (i.e. beat frequency) of the rhythm that is emitted to the user.

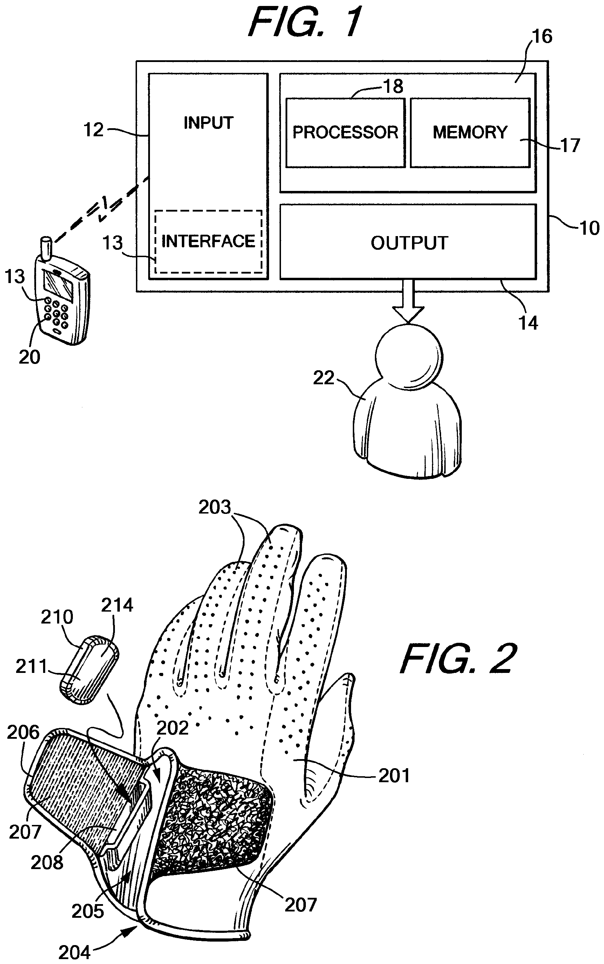

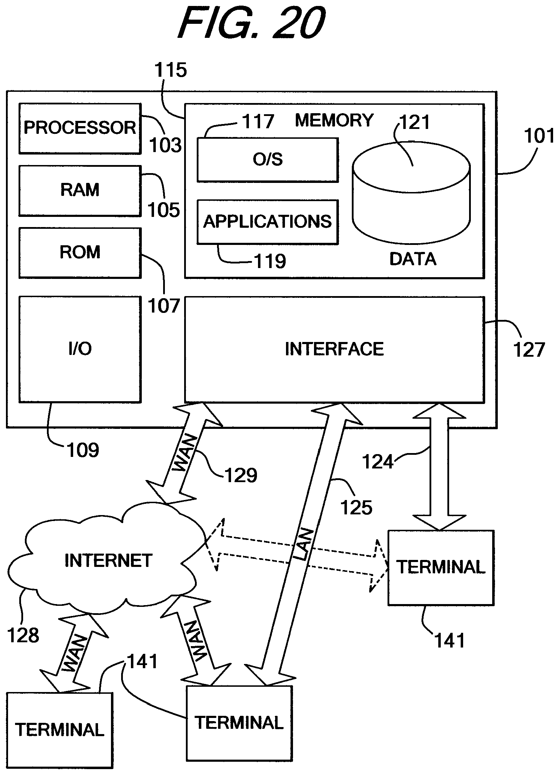

FIG. 1 illustrates one example embodiment of a tempo indicating device 10. The device 10 includes an input 12, an output 14, and a computer module 16 that may include a memory 17, a processor 18, as well as any other components of a computer module or device, including any components of the computer device 101 illustrated in FIG. 20. Additionally, the device 10 may include an external or internal power source (not shown). The input 12 is configured for receiving signals from a control interface 13 that can control the operation of the device 10 (including the processor 18 and/or the output 14), as well as other input signals. The input 12 may include any necessary components for receiving signals from the control interface 13, including one or more wires, ports, transceivers/receivers, etc. As shown in FIG. 1, the control interface 13 may be a physical part of the device 10, or may be remotely connected to the input 12, such as through various forms of wired or wireless communication. An example of a remote control interface 13 is illustrated in FIG. 1 as being part of a portable electronic device 20 that may be configured similarly to the computer device 101 illustrated in FIG. 20. It is understood that the device 10 may include both a remote control interface 13 and a control interface 13 that is directly connected to the device 10. It is also understood that multiple electronic devices, including multiple portable electronic devices 20 may be capable of functioning as control interfaces 13. For example, multiple electronic devices 20 may have software (e.g. applications) for interfacing with the input 12 of the device 10.

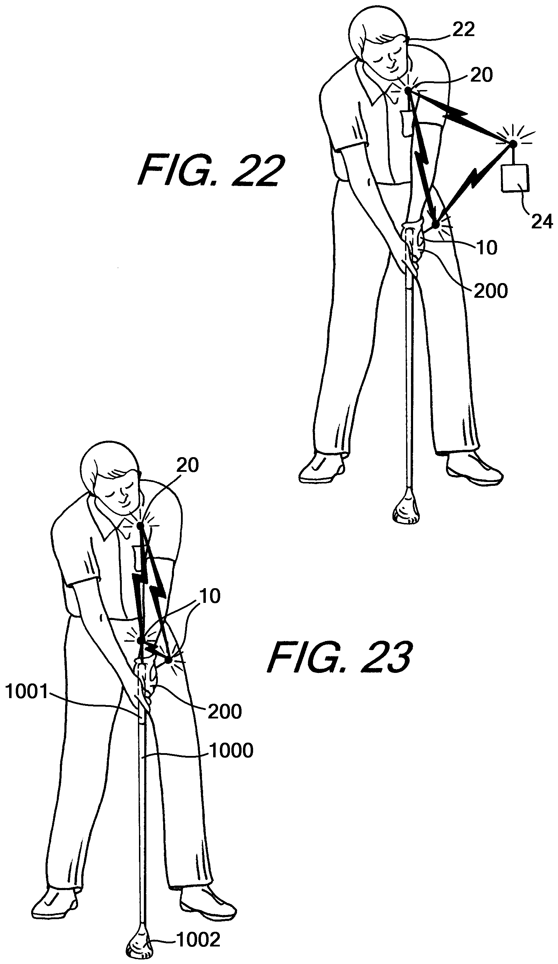

FIGS. 22 and 23 illustrate additional communication configurations for the device 10. In FIG. 22, the device 10 and/or the portable electronic device 20 (if utilized) may be in communication with a remote electronic device 24, such as a server or other network node. Data and instructions may be exchanged between the remote device 24 and the device 10 and/or the portable electronic device 20. The device 10 shown in FIG. 22 is located on the glove 200 worn by the user 22. In FIG. 23, a portable electronic device 20 is in communication with two different tempo indicating devices 10, one on the glove 200 worn by the user 22 and the other on the golf club 1000 swung by the user 22. The portable electronic device 20 may be used as a control interface 13 for either or both of the devices 10, and may control both devices 10 simultaneously. For example, in one embodiment, one device 10 could provide tactile rhythm output and the other device 10 could provide audio and/or visual rhythm output, to make the rhythm more detectable to the user 22. In other embodiments, additional communications configurations are possible. It is understood that FIG. 22 may depict the communication between the device 10, the portable electronic device 20, and an external sensor or data source, such as a GPS positioning mechanism. It is also understood that FIG. 23 may depict the communication between the device 10, the portable electronic device 20, and a sensor of some type in the club 1000 (e.g. accelerometer, RFID, etc.) as described below.

The control interface 13 is described in greater detail in various embodiments below, and may include one or more buttons or other input/output components, such as a full keyboard/ keypad, touchscreen, voice recognition components, microphone, mouse, and/or stylus. The control interface 13 may be configured for controlling one or more aspects of the operation of the device 10, including, for example, the activity (e.g., power on/off, sleep mode, etc.) of the device 10, the tempo of the rhythm emitted by the device 10, and/or the amplitude of the rhythm (e.g. tactile force, volume, brightness, etc.). This can make the tempo of the rhythm emitted by the device 10 controllable and variable according to the user's desire. The control interface 13 may further have a display for displaying certain operating parameters, such as the present rhythm tempo. Additionally, the control interface 13 may include automated control features. In one embodiment, the control interface 13 may have temperature or pressure sensors so that the device 10 can be activated (e.g., powered on) when the article of athletic equipment is engaged by the user. For example, in an embodiment where the device 10 is located in a golf glove or a golf club, as described below, the control interface 13 may be configured to activate the device 10 when the user puts on the glove or grips the club handle. Likewise, the device 10 may be automatically deactivated, such as when pressure ceases, or after a certain predetermined time after activation. Additional embodiments are contemplated as well.

The output 14 is configured for emitting a rhythm that is detectable by the user through the use of one or more senses, and may be considered to be a rhythm indicator. For example, the output 14 may be or include a powered movement mechanism that is configured for creating a vibrating and/or pulsing rhythm that is tactile in nature and can be detected through the user's sense of touch. As another example, the output 14 may be or include a light or other optical source (e.g. and LED) that blinks, changes color, or otherwise emits a visual rhythm to the user that can be visually detected by the user. As a further example, the output 14 may be or include an audio speaker or other audio source that emits an audible rhythm to the user that can be audibly detected by the user. Further configurations may be used in other embodiments, which may be detectable by other senses. It is understood that the output 14 may utilize more than one of such techniques or means for emitting the rhythm, such as a combination of one or more of tactile, audio, and/or visual.

The tempo indicating device 10 is used with a golf glove or other hand-receiving device (e.g. other types of general or specialized gloves, mittens, etc.). An example embodiment of such a golf glove 200 configured for use with a tempo indicating device 210 is illustrated in FIGS. 2-5. As shown in FIGS. 2-3A, the glove 200 includes a shell 201 defining a hand-receiving portion 202 and a plurality of finger-receiving portions 203 extending from the hand-receiving portion 202, configured to receive the hand and fingers of the user, respectively. In this embodiment, the glove 200 has five finger-receiving portions 203 that are configured to completely cover the user's fingers, however in another embodiment, one or more of the finger-receiving portions 203 may cover only a portion of the finger, or may be in the form of a hole that allows passage of the finger through and does not cover the finger (e.g. a fingerless glove). The shell 201 also defines an opening 204 to permit entry of the hand into the glove 200, with a slit 205 extending from the opening 204 to allow the opening 204 to be expanded for ease of entry. The glove 200 has a flap or strap 206 that is configured to extend across the slit 205 to retain the glove 200 securely on the user's hand, such as by use of one or more releasable connecting portions or structures 207, which may include hook-and-loop connecting structures, fasteners, buckles, and other such structures. The glove 200 further includes a receiver 208 or other retaining structure configured for connection to the device 210. In this embodiment, the receiver 208 is positioned on the inside of the glove 200, adjacent the flap 206, and is configured to removably receive the device 210 therein. The receiver 208 may be made from the same material as the majority of the glove 200, such as leather or similar material, or may be made from another material in another embodiment. It is understood that other types of gloves and other hand-receiving devices can be configured for use with a tempo indicating device 210, in other embodiments. The operation of the device 210 in connection with the glove 200 is described below.

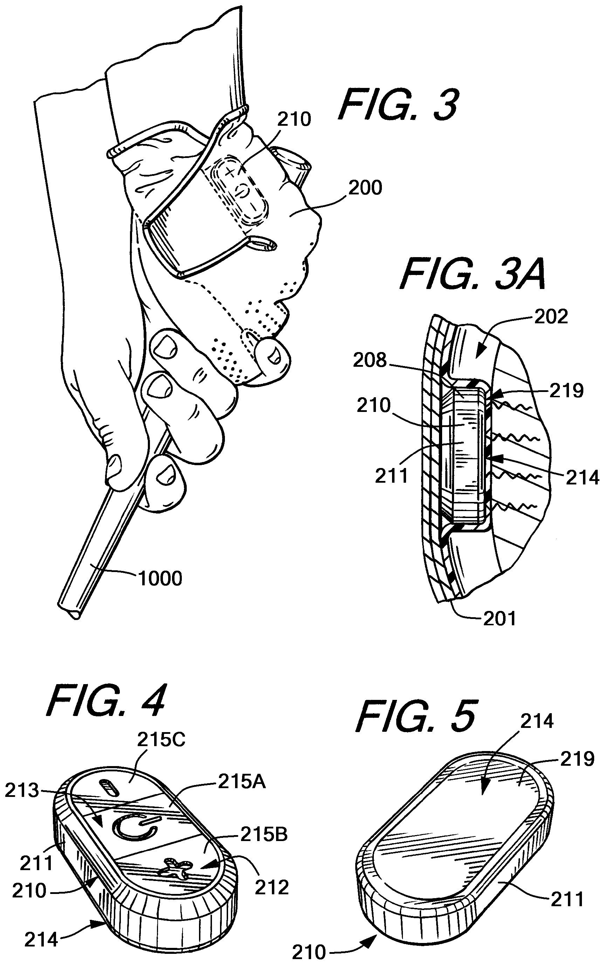

The embodiment of the device 210 shown in FIGS. 2-5 is in the form of a removable module that has a housing 211 that supports an input 212 with a control interface 213 in the form of three buttons 215A-C, including a power button 215A, a tempo increase button 215B, and a tempo decrease button 215C. The device 210 can be removed from the receiver 208 in order to access the buttons 215A-C, or the buttons 215A-C can be accessible through the shell 201 of the glove 200, such as through intuitive feel or through an access mechanism such as indicia on the outside of the glove 200 or an external opening into the receiver 208. The housing 211 also supports and contains an output 214 that includes a powered movement mechanism (not shown) configured for creating a vibrating or pulsing rhythm that is detectable by the user, as well as a computer module (not shown) for operating the device 210. The output 214 of the device 210 also includes a contact portion or surface 219 on the housing 211, which is configured to transmit the movement of the powered movement mechanism to the body (e.g. skin) of the user, so that the powered movement mechanism can emit the rhythm through the contact portion 219. As shown in FIG. 3A, the contact portion 219 vibrates or pulses to emit the rhythm to the hand and/or wrist of the user in a tactile manner, so that the user can feel and detect the rhythm. In this embodiment, the contact portion 219 emits the rhythm through a portion of the shell 201 of the glove 200 defining the receiver 208, however in another embodiment, the contact portion 219 may directly contact the user's body. In another embodiment, the device 210 may have an output 214 that emits the rhythm in one or more different manners, in addition to or instead of the tactile rhythm, such as a visual or audio rhythm. It is understood that the device 210 and the glove 200 may be configured differently in other embodiments.

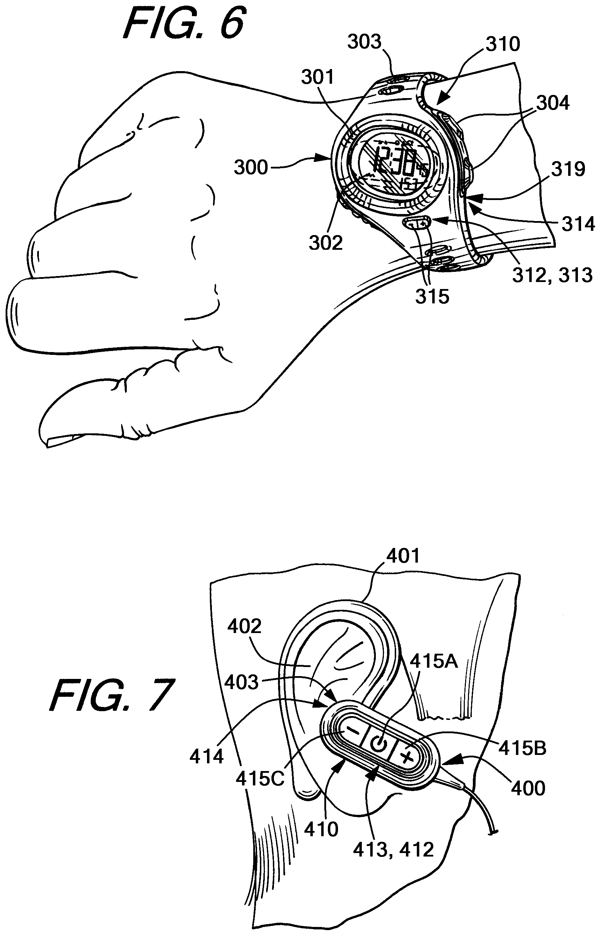

In an embodiment which is not part of the claimed invention, the tempo indicating device 10 may be configured for use with a wristwatch. An example embodiment of such a wristwatch 300 is illustrated in FIG. 6, including a tempo indicating device 310 contained integrally within the watch 300. The watch 300 includes a casing 301 that houses the timekeeping components of the watch 300, including any electronic and/or mechanical components. In this embodiment, the watch 300 is an electronic watch 300 with an internal electronic module (not shown), however, it is understood that the device 300 can be utilized with any watch, including other electronic/quartz watches, mechanical watches, etc. A display 302 is also supported by the casing 301, and a strap 303 connects the watch 300 to the user's arm or wrist. Buttons 304 for controlling various operations of the watch are also supported by the casing 301. The casing 301 of the watch 300 also contains and supports the device 310, and may function as the housing for the device 310. The device 310 includes an input 312 with a control interface 313 in the form of two buttons 315 for controlling tempo changes. Other buttons 304 of the watch 300 may also serve to control the device 310. The device 310 may have an electronic module (not shown) that is merged within the module of the watch 300. In this embodiment, the device 310 is configured for tactile rhythm output, and has an output 314 in the form of a powered movement mechanism (not shown) and a contact portion or surface 319 on the rear surface of the casing 301. As described above, the movement mechanism is configured to emit a tactile rhythm to the user through the contact portion 319, to be felt and detected by the user. In another embodiment, the device 310 may have an output 314 that emits the rhythm in one or more different manners, in addition to or instead of the tactile rhythm, such as a visual or audio rhythm through the display 302 or the alarm speaker (not shown) of the watch 300. It is understood that the device 310 and the watch 300 may be configured differently in other embodiments.

In an embodiment which is not part of the claimed invention, the device 10 may be configured for use as an earpiece configured to engage a user's ear and/or other part of the head to retain the earpiece proximate the user's ear. FIG. 7 illustrates one example embodiment of such an earpiece 400, with a tempo indicating device 410 connected to the earpiece 400. The earpiece 400 includes a mounting structure 401 that is configured to engage the outer portions of the user's ear 402 to retain the earpiece 400 on the ear 402. In other embodiments, the earpiece 400 may have a different mounting structure 401, such as structures configured for in-ear mounting (e.g., an earplug) or structures that engage the head, such as an earmuff-style band or a strap. The earpiece 400 may also have an audio source, such as a speaker 403 that is configured to emit audible output. The device 410 has a housing 411 that is connected to the mounting structure 401 and the speaker 403 of the earpiece 400, and an input 412 including a control interface 413 supported by the housing 411. As in the device 210 of FIGS. 4-5, the control interface 413 of the device 410 includes a power button 415A, a tempo increase button 415B, and a tempo decrease button 415C. The device 410 further includes an electronic module (not shown) contained within the housing 411, and an output 414 configured for emitting the rhythm as audible output through the speaker 403. The rhythm may be in the form of a metronome-like beat sequence of clicks, beeps, etc., or may be in the form of a more complex rhythm, such as music or a percussion track beat. In another embodiment, the device 410 may have an output 414 that emits the rhythm in one or more different manners, in addition to or instead of the audible rhythm, such as a visual or tactile rhythm. It is understood that the device 410 and the earpiece 400 may be configured differently in other embodiments.

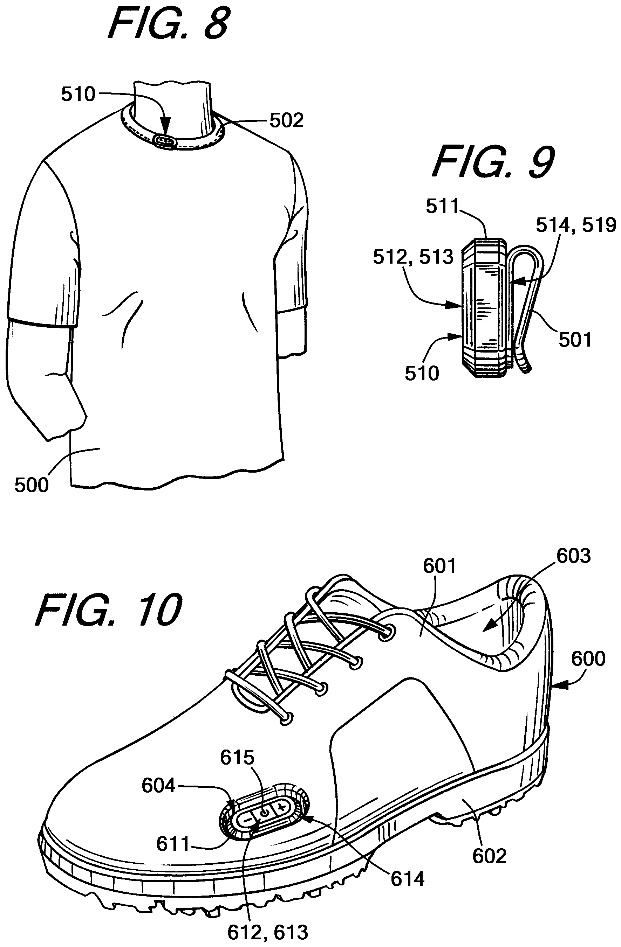

FIGS. 8 and 9 illustrate an embodiment, not part of the claimed invention, of a tempo indicating device 510 that is configured for removable connection to an article of clothing, such as a shirt 500, as shown in FIG. 8. The device 510 includes a housing 511 that supports an input 512 including a control interface 513 having buttons 515 for operation of the device 510. The housing 511 also contains an electronic module (not shown) and an output 514 including a powered movement mechanism (not shown) that emits a tactile rhythm through a contact portion 519 of the housing 511. The device 510 also has a retaining structure in the form of a clip 501 that is configured to receive and/or otherwise engage a portion of an article of clothing, such as the collar 502 of a shirt 500, to retain the device 510 on the clothing. In this position, the tactile rhythm of the device 510 can be felt and detected by the user through the contact portion 519 and/or the clip 501. In other embodiments, a different type of retaining structure 501, such as a jointed clip or other type of clip, or a fastener, buckle, strap, pin, or other retaining structure. The device 510 shown in FIGS. 8-9 can be clipped onto other articles of clothing, such as pants, shorts, a hat, a shoe, a sock, etc. Additionally, the device 510 may also be configured to be placed in a pocket of pants, shorts, or other article of clothing, or a specially designed receiver on an article of clothing, in order to emit the tactile rhythm to the user. It is understood that the module 210 shown in FIGS. 4-5 may be utilized in this same manner. In another embodiment, the device 510 may have an output 514 that emits the rhythm in one or more different manners, in addition to or instead of the tactile rhythm, such as a visual or audible rhythm. It is understood that the device 510 may be configured differently in other embodiments.

In an embodiment which is not part of the claimed invention, the device 10 may be configured for use in connection with an article of footwear configured to be worn by the user. FIG. 10 illustrates one example embodiment of such an article of footwear 600, with a tempo indicating device 610 connected to the footwear 600. In this embodiment, the footwear 600 is shown as a golf shoe, having an upper portion 601 and a lower or sole portion 602 defining a foot-receiving chamber 603. The sole 602 may have spikes and/or treads to enhance traction. The footwear 600 includes a receiver 604 that at least partially receives the device 610 therein in a position to emit a tactile rhythm that is detectable by the user. The device 610 includes a housing 611 that is engaged by the receiver 604 of the footwear 600 to retain the device 610 permanently or releasably. The housing 611 supports an input 612 that includes a control interface 613 that has buttons 615. The housing 611 also supports an electronic module (not shown) and an output 614 including a powered movement mechanism (not shown) that emits a tactile rhythm through a contact portion (not shown) of the housing 611. The receiver 604 is positioned in the upper 601 of the footwear 600 in this embodiment, such that the contact portion of the housing 611 is positioned within or adjacent the foot-receiving chamber 603 of the footwear 600, in order to permit the user to feel and detect the tactile rhythm. In another embodiment, the receiver 604 may be positioned in the sole 602, such as within a cavity within the midsole member of the footwear 600. Different types of footwear can be configured for use with the device 610 or another configuration of a tempo indicating device, and may contain a receiver or other retaining structure for that purpose. In a further embodiment, the device 610 may have an output 614 that emits the rhythm in one or more different manners, in addition to or instead of the tactile rhythm, such as a visual or audible rhythm. It is understood that the device 610 may be configured differently in other embodiments.

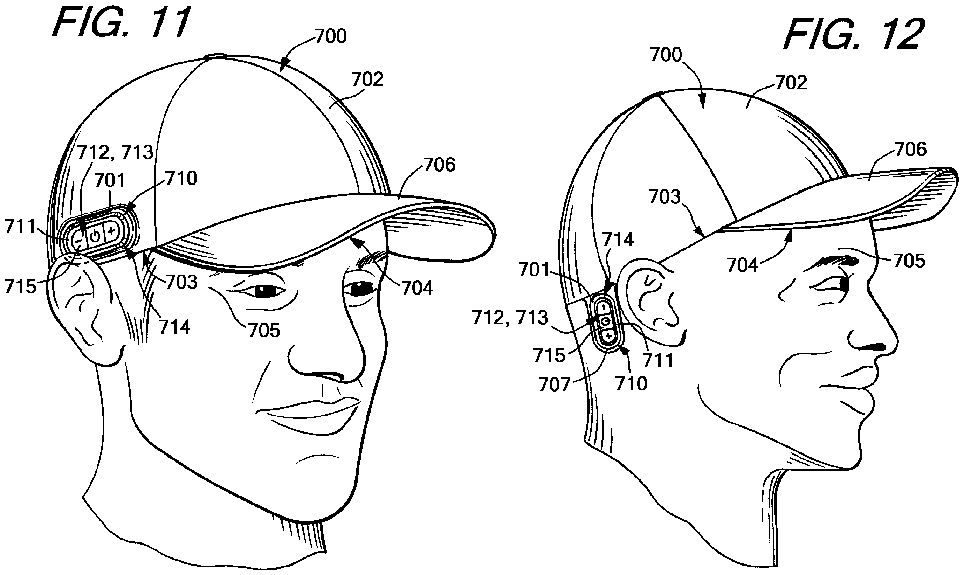

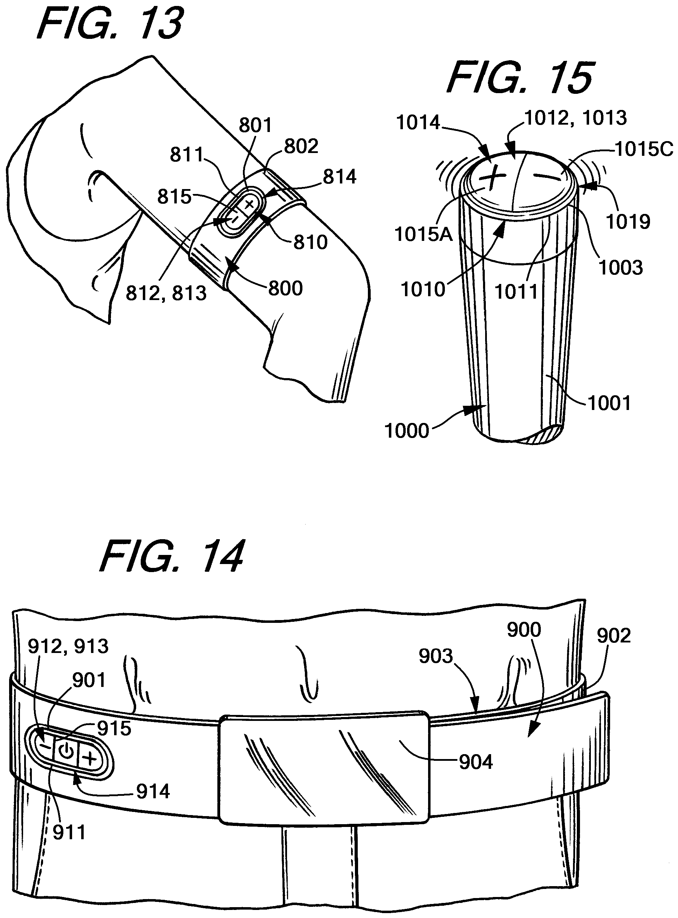

FIGS. 11-14 illustrate embodiments outside of the claimed invention showing additional articles of clothing that have tempo indicating devices connected thereto. FIGS. 11-12 illustrate two embodiments of a hat 700 that has a receiver or other connecting structure 701 for connection to the device 710. FIG. 13 illustrates an armband 800 that has a receiver or other connecting structure 801 for connection to the device 810. FIG. 14 illustrates a belt 900 that has a receiver or other connecting structure 901 for connection to the device 910. The devices 710, 810, 910 in these embodiments are similarly constructed, having a housing 711, 811, 911 that supports an input 712, 812, 912 including a control interface 713, 813, 913 having buttons 715, 815, 915 thereon. The housing 711, 811, 911 also supports an electronic module (not shown) and an output 714, 814, 914 that includes a powered movement mechanism (not shown) configured to emit a tactile rhythm through a contact portion (not shown) to be detected by the user. The receivers 701, 801, 901 in these embodiments at least partially receive the device 710, 810, 910 and retain the device 710, 810, 910 in position for the contact portion to emit the tactile rhythm so the user can feel and detect the rhythm. These embodiments are described briefly below.

The hat 700 in FIGS. 11-12 has a top 702 with a lower edge 703 defining an opening 704 to receive the user's head 705 therein. The hat 700 also has a brim 706, and may further contain other structure, such as a sizing mechanism (buckle, strap, elastic, etc.) if the hat 700 is not of the fitted type. The hat 700 has the receiver 701 positioned proximate the lower edge 703 and the opening 704 in both FIGS. 11 and 12. In the embodiment of FIG. 11, the receiver 701 is positioned just above the lower edge 703 of the hat 700, and in the embodiment of FIG. 12, the receiver 701 is positioned on a flap 707 extending downward from the lower edge 703 of the hat 700. In this embodiment, the flap 707 extends behind the user's ear to place the contact portion into contact with the area behind the user's ear. It is understood that different types of hats 700 can be configured for use with the device 710. In another embodiment, the device 710 may have an output 714 that emits the rhythm in one or more different manners, in addition to or instead of the tactile rhythm, such as a visual or audible rhythm. It is understood that the device 710 may be configured differently in other embodiments.

The armband 800 in FIG. 13 has a band portion 802 defining the opening 803 that receives the user's arm. The band portion 802 includes the receiver 801 configured to retain the device 810. The contact portion of the housing 811 of the device 810 is positioned on the inner side of the band 802, so that the contact portion can emit the tactile rhythm to the user to be felt and detected by the user. In a further embodiment, the device 810 may have an output 814 that emits the rhythm in one or more different manners, in addition to or instead of the tactile rhythm, such as a visual or audible rhythm. It is understood that the device 810 may be configured differently in other embodiments.

The belt 900 in FIG. 14 has a band portion 902 defining an opening 903 that receives the user's torso therethrough, and a buckle 904 configured for adjusting the size of the belt 900. The band portion 902 includes the receiver 901 configured to retain the device 910. The contact portion of the housing 911 of the device 910 is positioned on the inner side of the band 902, so that the contact portion can emit the tactile rhythm to the user to be felt and detected by the user. In another embodiment, the receiver 901 may be included in the buckle 904 of the belt 900. In a further embodiment, the device 910 may have an output 914 that emits the rhythm in one or more different manners, in addition to or instead of the tactile rhythm, such as a visual or audible rhythm. It is understood that the device 910 and/or the belt 900 may be configured differently in other embodiments.

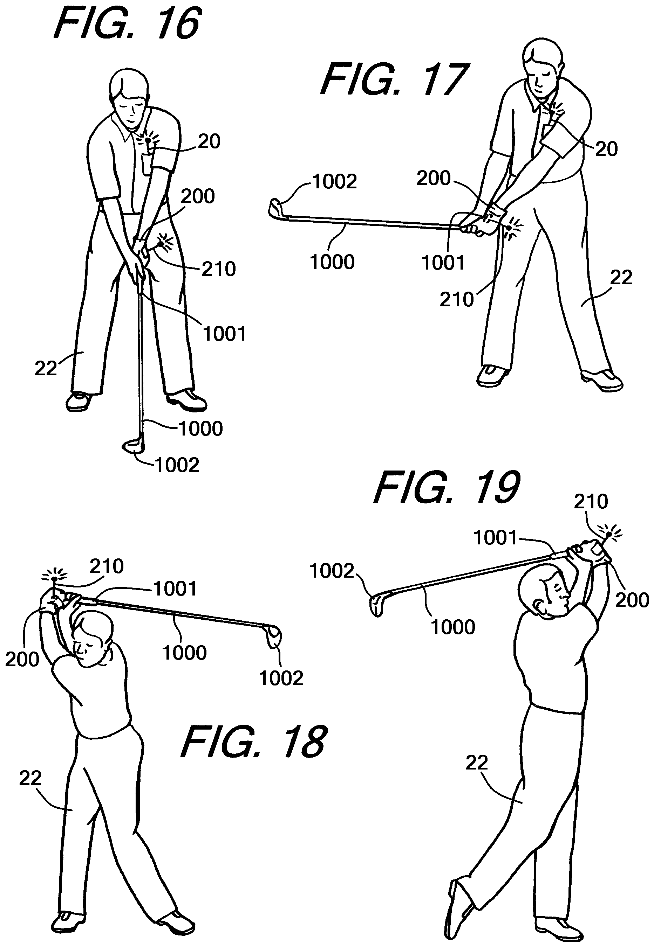

In an embodiment which is not part of the claimed invention, the device 10 may be configured for use in connection with a golf club or other ball striking device configured to be used by the user to strike a ball. An example embodiment of such a golf club 1000 is illustrated in FIG. 15, including a tempo indicating device 1010 connected to the club 1000. The club 1000 may be of any type, including a wood-type club, and iron-type club, a putter, or other type of golf club. In the embodiment of FIG. 15, the device 1010 is connected to a handle or shaft 1001 of the club 1000, and it is understood that the club or other ball striking device 1000 may contain additional features as shown in FIGS. 16-19, such as a ball striking head 1002 for striking the ball in play. The handle 1001 of the club 1000 has a receiver or other retaining structure 1003 that is configured to at least partially receive the device 1010 therein and to retain the device 1010 permanently or releasably to the club 1000. The device 1010 includes a housing 1011 that is engaged by the receiver 1003 of the club 1000 to retain the device 1010 permanently or releasably. The housing 1011 supports an input 1012 that includes a control interface 1013 that has a tempo increase button 1015A, and a tempo decrease button 1015B. The housing 1011 also supports an electronic module (not shown) and an output 1014 including a powered movement mechanism (not shown) that emits a tactile rhythm through a contact portion 1019 of the housing 1011. The user can feel and detect the tactile rhythm when the club 1000 is in use, because the contact portion is located in the handle 1001 that is gripped by the user. In another embodiment, the device 1010 may have an output 1014 that emits the rhythm in one or more different manners, in addition to or instead of the tactile rhythm, such as a visual or audible rhythm. It is understood that the device 1010 may be configured differently in other embodiments.

The portable electronic device 20 may be one of many different types of devices configured for wired and/or wireless communication with the device 10. For example, a smartphone or other phone, a wristwatch with appropriate hardware, a laptop computer, or other general purpose portable device may be used. As another example, a more specifically designed portable electronic device 20 may be used. In one embodiment, any of the configurations of the tempo indicating devices 10, et seq., described above can be utilized as a portable electronic device 20 to remotely control another tempo indicating device 10, et seq. For example, the control interfaces of the device 310 in the watch 300 of FIG. 6, the device 510 of FIGS. 8-9, the devices 810, 910 on the band 800 and belt 900 of FIGS. 13-14, or the device 1010 on the club 1000 of FIG. 15 may be conveniently positioned to be used to control a different tempo indicating device 10, et seq., in communication therewith. As another example, the interface 213 of the device 210 in the glove 200 of FIGS. 2-5 may be configured as a control device for controlling any other tempo indicating device 10. Additional configurations are recognizable to those of skill in the art.

A user may utilize the tempo indicating device 10, et seq., in connection with swinging a ball striking device, in order to synchronize the user's swing movements with the rhythm emitted by the device 10, et seq. FIGS. 16-19 illustrate one method of operation of the tempo indicating device 210 of FIGS. 2-5, used in connection with a golf glove 200. As shown in FIGS. 16-19, in this embodiment, the device 210 can be used with a portable electronic device 20 functioning as a control interface 13, as described above with respect to FIG. 1. Nevertheless, it is understood that the device 210 can alternately be operated using the control interface 213 connected to the housing 211, as described above with respect to FIGS. 2-5. FIG. 16 illustrates a user 22 standing in position to begin a golf swing. In this position, the device 210 has been activated using the portable electronic device 20 or the control interface 213 directly on the device 10 to set the rhythm to a desired tempo. The device 210 is thereby emitting the rhythm in tactile form to the user 22, so that the user 22 can detect the rhythm. In one method of use, the user 22 begins his/her backswing on a first count of the rhythm, as shown in FIG. 17, reaches the top of his/her swing on the second count of the rhythm, as shown in FIG. 18, and completes his/her forward swing on the third count of the rhythm, as shown in FIG. 19. It is understood that the "first" and subsequent counts of the rhythm may not arbitrarily selected by the user 22, and need not begin at the first count actually emitted by the device 210. It is also understood that the user 22 may choose to synchronize his/her movements differently with the rhythm. For example, a user 22 desiring a slow backswing may choose to take two counts to complete his/her backswing, rather than a single count. By adjusting the tempo of the rhythm using the control interface (e.g. 13 or 213), the user 22 can give himself/herself a different rhythm to follow, to change the tempo of his/her swing. Certain users 22 may have an optimal tempo for swinging, and the device 210 can be adjusted until the optimal tempo is found, which can be done by an expert as part of a "custom club fitting" procedure. The repeated use of the device 210 during play can allow the user 22 to consistently practice using the same swing tempo, which can, in turn, increase the consistency and quality of the user's golf play. It is further understood that any other embodiments of a tempo indicating device 10, et seq., shown and/or described herein can be utilized in a similar manner.

As described above, the user may have different optimal or desired swing tempos with different clubs. For example, a user may have one optimal tempo with a driver or other wood club, another optimal tempo with a long iron, another with a short iron, and yet another with a putter. Some golfers may even have different optimal tempos with different individual clubs. In one embodiment, the device 10, et seq., may be configured to automatically adjust the tempo of the rhythm emitted based on which club is being used. Automatic detection mechanisms, such as RFID technology, may be utilized for this purpose. GPS may also be used as an automatic detection mechanism, so that certain clubs are automatically predicted based on distance from the hole. Manual mechanisms may alternately be used so that the user does not need to remember the tempo for each club. For example, a user voice control or display interface that allows a user to indicate a club rather than a swing tempo may be used, where the swing tempo for the specific club is stored already. Labels or other may be affixed to the clubs indicating the proper swing tempo as well. The portable electronic device 20 and/or other computer devices may be utilized in this automatic adjustment process. At least one of the computer devices (e.g. 10, 20, etc.) may receive an input of a club identity, such as through automatic or manual methods as discussed above, and may then determine a proper swing tempo based on stored data. The stored data may have been previously entered by a user or other person (e.g., a golf pro or club fitting technician). The device 10, et seq., can then emit the proper rhythm corresponding to the determined swing tempo.

In additional embodiments, the ball striking device 1000 may contain accelerometers or other sensor(s) (not shown) to detect and/or record the physics of the user's swing. The data from the accelerometer can be communicated to the device 10, et seq., the portable electronic device 20, and/or any other computer device described herein. One use for this data may be to alter or control the rhythm output of the device 10, et seq., at different points in the swing. For example, the device 10, et seq., may change qualities or characteristics of the rhythm during the backswing, such as increasing or otherwise changing the force of a tactile vibration or the volume or inflection/pitch of an audio emission. Another use for this data may be to grade user performance, i.e., how closely the user's swing was synchronized with the rhythm. Further uses may be recognized by those skilled in the art.

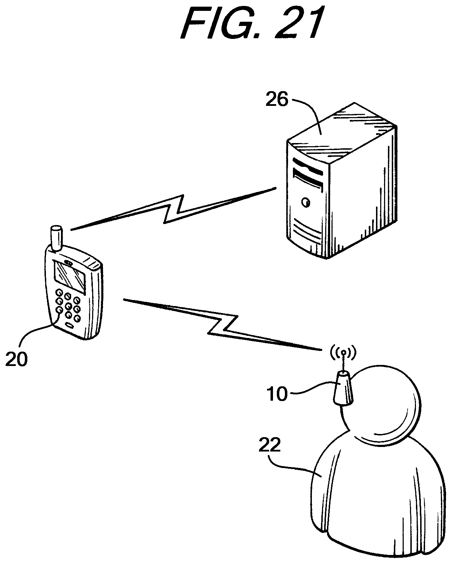

In one embodiment, the tempo indicating device 10 may be configured to provide audio output in the form of a song or other audio content that has a rhythm with a specified tempo. FIG. 21 illustrates one embodiment of a system for providing such audio output, which utilizes a portable electronic device 20 in connection with the tempo indicating device 10. The tempo indicating device 10 in this embodiment contains an audio output 14, such as a speaker or other audio source, and may be in the form of an earpiece, earphones, headphones, headset, or other personal and/or portable audio source. The portable electronic device 20 receives an input of a specified tempo, such as from the user 22 as described above, and then a search is performed to identify one or more audio files that store one or more songs that have a musical tempo that corresponds to the specified tempo. In one embodiment, the songs may have a musical tempo that is equal or substantially equal to the specified tempo, and in another embodiment, the musical tempo of each song may be an integer multiple of the specified tempo (e.g. 1x, 2x, etc.). The search may cover a plurality of different audio files that may be stored in a memory, such as the memory of the portable electronic device 20 and/or the memory of a remote device 26, such as a server. Such searching and analysis to identify the song(s) can be performed using existing music processing software in one embodiment. The portable electronic device 20 may search, analyze, and identify the song(s) alone, by searching songs stored on the portable electronic device 20 and/or may also utilize one or more servers or other remote computer devices 26. The server(s) 26 may perform any number of actions in providing the audio content to the user 22, including searching, analyzing, and/or identifying the song(s), as well as delivering the song(s) to the portable electronic device 20 and/or the audio source 28, such as by downloading or streaming. It is understood that the communications between the server(s) 26 and the portable electronic device 20 may be performed as described below with respect to FIG. 20.

After the song(s) are identified, the corresponding audio file(s) are processed using audio file processing software (e.g. numerous existing applications) to cause the device 10 to play the song(s) to be audible to the user 22. The processing may include transmitting a signal configured to cause the device 10 to play the song(s). The processing may also include creating and/or storing a playlist containing one or a plurality of audio files that have musical tempos corresponding to the specified tempo. This playlist may be stored, for example on the portable electronic device 20 and/or on the device 10, and enables the user 22 to play the songs on the playlist at a later date. Multiple playlists can be created and stored for different tempos. This can enable different users to utilize the same device (e.g. portable electronic device 20) for storing playlists, and can also enable a single user 22 to utilize the device 20 to store multiple playlists for different swinging situations, such as while using different clubs for which different swing tempos may be desired. Again, the portable electronic device 20 may perform the processing alone, or the server(s) 26 may perform all or part of the processing.

FIG. 20 illustrates a block diagram of a computer device 101 that may be used according to an illustrative embodiment of the invention. It is understood that any computer device described herein may contain some or all features and/or components of the computer device 101 of FIG. 20, including the portable electronic device 20 of FIGS. 1, 16-19, and 21-23, the remote electronic device 24 of FIG. 22, the server 26 of FIG. 21, and the various embodiments of tempo indicating devices 10, et seq., described herein. The device 101 may have a processor 103 for controlling overall operation of the device 101 and its associated components, including RAM 105, ROM 107, input/output module 109, and memory 115. I/O 109 may include a user input device through which a user of the device 101 may provide input, such as a microphone, keypad, touch screen, mouse, and/or stylus, and may also include one or more of a speaker for providing audio output and a video display device for providing textual, audiovisual and/or graphical output.

Software may be stored within memory 115 and/or storage to provide instructions to processor 103 for enabling the device 101 to perform various functions, including functions relating to the methods described herein. For example, memory 115 may store software used by the device 101, such as an operating system 117, application programs 119, and an associated database 121. Alternatively, some or all of the computer executable instructions may be embodied in hardware or firmware (not shown). As described in detail below, the database 121 may provide centralized storage of account information and account holder information for a business, allowing interoperability between different elements of the business residing at different physical locations. It is understood that a single device 101, single processor 103, and single memory 115 are shown and described for sake of simplicity, and that the device 101, processor 103, and memory 115 may include a plurality of computer devices, processors, and memories respectively, and may comprise a system of computer devices, processors, and/or memories.

The device 101 may be configured to operate in a networked environment supporting connections to one or more other computers, such as terminals 141. The terminals 141 may be computer devices that include many or all of the elements described above relative to the device 101. The network connections depicted in FIG. 20 include a wide area network (WAN) 129, and may also include other networks, such as a local area network (LAN) 125, a cellular/mobile network 124, and other communication paths, all of which provide connections to terminals 141. The terminals 141 connected to the device 101 can be any type of computer device or component, including servers, personal computers, mobile devices, automobile computers, and any other conceivable type of computer component or device. One or more communications interfaces 127 generally provide connections to these various networks 124, 125, 129. When used in a LAN networking environment, the device 101 is connected to the LAN through a network interface or adapter. When used in a WAN networking environment, the device 101 may include a modem for establishing communications over the WAN, and may also include transceivers for Wi-Fi, Bluetooth, infrared or other optical communication, near field communication (NFC), among other means. Connection to the cellular/mobile network 124 may be provided, for example, by a GSM / TDMA service provider. The other communication paths mentioned can include direct communication, such as by Bluetooth or Wi-Fi. In one embodiment, the device 101 may be used for voice connectivity through Wi-Fi, rather than cellular or land phone lines. The WAN 129 can provide connection to the Internet 128, and it is understood that other communication paths, such as cellular/mobile network 124 can also provide Internet connectivity. It is understood that the device 101 can connect to each one of the other terminals 141 through more than one of the networks 124, 125, 129. It will be appreciated that the network connections shown are exemplary and other means of establishing a communications link between the computers may be used. The existence of any of various well-known protocols such as TCP/IP, Ethernet, FTP, HTTP and the like is presumed, and the system can be operated in a client-server configuration to permit a user to retrieve web pages from a web-based server. Any of various conventional web browsers can be used to display and manipulate data on web pages.

Additionally, an application program 119 used by the device 101 according to an illustrative embodiment of the invention may include computer executable instructions for invoking user functionality related to communication, such as email, short message service (SMS), peer-to-peer exchanges, and voice input and speech recognition applications, as well as any other applicable techniques.

Aspects of the present invention are operational with numerous other general purpose or special purpose computing system environments or configurations, such as the computer device 101 shown in FIG. 20. Examples of well-known computing systems, environments, and/or configurations that may be suitable for use with the present invention include, but are not limited to, personal computers, server computers, hand-held devices, laptop devices, multiprocessor systems, microprocessor-based systems, set top boxes, programmable consumer electronics, network PCs, minicomputers, mainframe computers, distributed computing environments that include any of the above systems or devices, and the like.

In additional embodiments, two or more tempo indicating devices 10 may be used simultaneously in various configurations, such as the configurations illustrated in FIGS. 22-23 or other configurations, including any two or more of the various embodiments of tempo indicating devices 10, et seq., shown and described herein. Such devices 10, et seq., may be configured to give the same or different types of rhythm output. Additionally, such devices 10, et seq., may be configured for control by a single control interface 13 and/or portable electronic device 20, or different control interfaces 13 and/or portable electronic devices 20 may control different tempo indicating devices 10, et seq. Further configurations are contemplated.

As will be appreciated by one of skill in the art, various aspects described herein may be embodied as a method, a data processing system, or a computer program product. Accordingly, those aspects may take the form of an entirely hardware embodiment, an entirely software embodiment or an embodiment combining software and hardware aspects. Furthermore, such aspects may take the form of a computer program product stored by one or more tangible and/or non-transitory computer-readable storage media having computer-readable program code, or instructions, embodied in or on the storage media. Any suitable tangible and/or non-transitory computer readable storage media may be utilized, including hard disks, CD-ROMs, optical storage devices, magnetic storage devices, and/or any combination thereof. In addition, various intangible signals representing data or events as described herein may be transferred between a source and a destination in the form of electromagnetic waves traveling through signal-conducting media such as metal wires, optical fibers, and/or wireless transmission media (e.g., air and/or space).

Aspects of the present invention may be described in the general context of computer-executable instructions, such as program modules, being executed by a computer. Generally, program mode routines, programs, objects, components, data structures, etc. that perform particular tasks or implement particular abstract data types. Such a program module may be contained in a tangible computer-readable medium, as described above. The present invention may also be practiced in distributed computing environments where tasks are performed by remote processing devices that are linked through a communications network. In a distributed computing environment, program modules may be located in the memory 115, which may include both local and remote computer storage media including memory storage devices. It is understood that connections and communications disclosed herein may be made by any type of wired or wireless connection or communication.

The systems, methods, and devices as described herein provide many benefits and advantages over existing products. For example, the use of a tempo indicating device enables a user to synchronize his/her swing to a tempo emitted by the device. This can assist in improving swing mechanics and swing consistency, and can be useful in practice and in recreational and competitive play. The existence of different options for rhythm outputs (e.g. audio, tactile, visual, etc.) enables a user to choose a device having an output that is desirable, or that complies with applicable rules. Additionally, using the device to provide rhythm output in song form not only assists a user in swing synchronization, but also provides entertainment for the user. Further benefits and advantages are recognized by those skilled in the art.

## Claims

1. A system comprising:
a golf glove configured to be worn by a user during golf play, the golf glove comprising a shell defining a hand-receiving portion and a plurality of finger-receiving portions, and a receiver connected to the shell and defining a cavity, the receiver configured to be in contact with the hand of the user when the hand is received by the golf glove;
a tempo indicating device removably connected to the golf glove and at least partially
received within the receiver, the tempo indicating device comprising a housing and a powered movement mechanism at least partially contained within the housing, the housing having a contact portion, and the powered movement mechanism being configured for emitting a tactile rhythm to the user through the contact portion that is detectable by the user through sense of touch when the hand is received in the hand-receiving portion of the golf glove; and
a control interface located on a portable electronic device in communication with the tempo indicating device and configured to receive user input and transmit a signal to control a tempo of the tactile rhythm of the tempo indicating device, such that the portable electronic device detects a golf club being used and communicates an optimal tempo for the golf club being used, wherein the optimal tempo for the golf club being used is stored on the portable electronic device and wherein the portable electronic device utilizes GPS technology to determine a distance from the hole, thereby detecting the golf club being used.

2. The system of claim 1, wherein the control interface is located on the portable electronic device adapted to be carried by the user, the portable electronic device having a communication interface configured for transmitting and receiving signals to and from the tempo indicating device.

3. The system of claim 1, wherein the control interface is located on the portable electronic device adapted to be carried by the user, the portable electronic device configured for transmitting and receiving signals to and from the tempo indicating device, optionally wherein the portable electronic device has a memory storing an application configured for accepting user input to control the tempo indicating device and a processor configured for executing the computer-executable instructions to transmit a wireless signal to the tempo indicating device.

4. The system of claim 1, wherein the golf glove further comprises a flap extending from the shell and configured to be releasably connected to a connecting portion of the shell to retain the golf glove on a hand, wherein the receiver is positioned on the connecting portion.

5. The system of claim 1, wherein the contact portion of the tempo indicating device is exposed to the hand receiving portion, such that the contact portion is configured to contact a hand of a user directly when the hand is received in the hand receiving portion.

6. The system of claim 1, wherein the contact portion of the tempo indicating device is positioned in contact with the shell, wherein the contact portion is configured to emit the tactile rhythm to the user through the shell.

7. The system of claim 1, wherein the control interface is at least partially supported by the housing.

8. The system of claim 1, wherein the portable electronic device receives a communication from an RFID sensor located on the golf club to detect the golf club being used.

9. The system of claim 1, wherein the portable electronic device utilizes the control interface to allow the user to indicate which golf club is being used.

## Patentansprüche

1. System, umfassend:
einen Golfhandschuh, dafür ausgelegt, von einem Benutzer beim Golfspiel getragen zu werden, wobei der Golfhandschuh eine Hülle umfasst, die einen Handaufnahmeteil umgibt, und mehrere Fingeraufnahmeteile, und eine Aufnahme, die mit der Hülle verbunden ist und einen Hohlraum umgibt,
wobei die Aufnahme dafür ausgebildet ist, mit der Hand des Benutzers in Berührung zu stehen, wenn sich die Hand im Golfhandschuh befindet,
eine Tempoanzeigevorrichtung, die abnehmbar mit dem Golfhandschuh verbunden ist und mindestens teilweise in der Aufnahme aufgenommen wird, wobei die Tempoanzeigevorrichtung ein Gehäuse umfasst und einen angetriebenen Bewegungsmechanismus, der sich mindestens teilweise innerhalb des Gehäuses befindet, wobei das Gehäuse einen Kontaktbereich aufweist und der angetriebene Bewegungsmechanismus dafür eingerichtet ist, dem Benutzer durch den Kontaktbereich einen fühlbaren Rhythmus zu senden, der vom Benutzer durch den Tastsinn spürbar ist, wenn sich die Hand im Handaufnahmeteil des Golfhandschuhes befindet, und
eine Steuerschnittstelle, die sich an einer tragbaren elektronischen Vorrichtung befindet, die mit der Tempoanzeigevorrichtung kommuniziert und dafür eingerichtet ist, Benutzereingaben zu empfangen und ein Signal zur Steuerung eines Tempos des fühlbaren Rhythmus der Tempoanzeigevorrichtung zu senden, derart, dass die tragbare elektronische Vorrichtung einen gerade benutzten Golfschläger detektiert und ein optimales Tempo für den benutzten Golfschläger sendet, wobei das optimale Tempo für den benutzten Golfschläger in der tragbaren elektronischen Vorrichtung gespeichert ist, und wobei die tragbare elektronische Vorrichtung GPS-Technik verwendet, um eine Entfernung vom Loch zu bestimmen und dadurch den benutzten Golfschläger zu bestimmen.

2. System nach Patentanspruch 1, in dem sich die Steuerschnittstelle an der tragbaren elektronischen Vorrichtung befindet, die dafür ausgelegt ist, vom Benutzer getragen zu werden, wobei die tragbare elektronische Vorrichtung über eine Kommunikationsschnittstelle zur Sendung und zum Empfang von Signalen an die und von der Tempoanzeigevorrichtung verfügt.

3. System nach Patentanspruch 1, in dem sich die Steuerschnittstelle an der tragbaren elektronischen Vorrichtung befindet, die dafür ausgelegt ist, vom Benutzer getragen zu werden, wobei die tragbare elektronische Vorrichtung zur Sendung und zum Empfang von Signalen an die und von der Tempoanzeigevorrichtung eingerichtet ist, wobei optional die tragbare elektronische Vorrichtung über einen Speicher verfügt, in dem ein Applikationsprogramm gespeichert ist, das dafür eingerichtet ist, Benutzereingaben zu empfangen, um die Tempoanzeigevorrichtung zu steuern, und einen Prozessor, dafür eingerichtet, die computerausführbaren Befehle zur Sendung eines Funksignals an die Tempoanzeigevorrichtung auszuführen.

4. System nach Patentanspruch 1, in dem der Golfhandschuh außerdem eine Klappe umfasst, die von der Hülle ausgeht und dafür ausgelegt ist, mit einem Verbindungsteil der Hülle lösbar verbunden zu werden, um den Golfhandschuh auf einer Hand zu halten, wobei sich der Empfänger am Verbindungsteil befindet.

5. System nach Patentanspruch 1, in dem der Kontaktbereich der Tempoanzeigevorrichtung zum Handaufnahmeteil offen ist, so dass der Kontaktbereich dafür ausgebildet ist, die Hand eines Benutzers unmittelbar zu berühren, wenn sich die Hand im Handaufnahmeteil befindet.

6. System nach Patentanspruch 1, in dem der Kontaktbereich der Tempoanzeigevorrichtung in Berührung mit der Hülle angeordnet ist, wobei der Kontaktbereich dafür ausgebildet ist, den fühlbaren Rhythmus durch die Hülle an den Benutzer zu senden.

7. System nach Patentanspruch 1, in dem die Steuerschnittstelle mindestens teilweise vom Gehäuse getragen wird.

8. System nach Patentanspruch 1, in dem die tragbare elektronische Vorrichtung eine Mitteilung von einem RFID-Sensor empfängt, der am Golfschläger angeordnet ist, um den benutzten Golfschläger zu detektieren.

9. System nach Patentanspruch 1, in dem die tragbare elektronische Vorrichtung die Steuerschnittstelle verwendet, um dem Benutzer zu erlauben anzugeben, welcher Golfschläger gerade verwendet wird.

## Revendications

1. Système comprenant :
un gant de golf conformé pour être porté par un utilisateur au cours d'une partie de golf, ce gant de golf comprenant une coque définissant une partie de réception d'une main et un ensemble de parties de réception de doigts ainsi qu'un récepteur connecté à la coque et définissant une cavité,
le récepteur étant conformé pour venir en contact avec la main de l'utilisateur lorsque cette main est logée dans le gant de golf,
un dispositif indicateur de cadence relié de façon amovible au gant de golf et au moins partiellement logé dans le récepteur, le dispositif indicateur de cadence comprenant un boîtier et un mécanisme de mouvement motorisé au moins partiellement logé dans le boîtier, le boîtier ayant une partie de contact et le mécanisme de mouvement motorisé étant conformé pour émettre par l'intermédiaire de la partie de contact un rythme tactile que l'utilisateur peut détecter par son sens du toucher lorsque sa main est logée dans la partie de réception d'une main du gant de golf, et
une interface de commande située sur un dispositif électronique portatif en communication avec le dispositif indicateur de cadence et conformée pour recevoir une entrée d'utilisateur et transmettre un signal pour commander la cadence du rythme tactile du dispositif indicateur de cadence de sorte que le dispositif électronique portatif détecte le club de golf utilisé et communique la cadence optimum pour le club de golf utilisé, la cadence optimum pour le club de golf utilisé étant stockée dans le dispositif électronique portatif et le dispositif électronique portatif utilisant la technologie GPS pour déterminer la distance du trou, en permettant ainsi de détecter le club de golf utilisé.

2. Système conforme à la revendication 1,
dans lequel l'interface de commande est située sur un dispositif électronique portatif adapté pour être porté par l'utilisateur, ce dispositif électronique portatif ayant une interface de communication conformée pour permettre de transmettre des signaux au dispositif indicateur de cadence et de recevoir des signaux provenant de ce dispositif.

3. Système conforme à la revendication 1,
dans lequel l'interface de commande est située sur un dispositif électronique portatif adapté pour être porté par l'utilisateur, ce dispositif électronique portatif étant conformé pour permettre de transmettre des signaux au dispositif indicateur de cadence et de recevoir des signaux provenant de ce dispositif, et, le cas échéant, le dispositif électronique portatif comporte une mémoire stockant une application conformée pour accepter une entrée d'utilisateur permettant de commander le dispositif indicateur de cadence et un processeur conformé pour permettre d'exécuter des instructions exécutables par ordinateur pour transmettre un signal radio au dispositif indicateur de cadence.

4. Système conforme à la revendication 1,
dans lequel le gant de golf comprend en outre un rabat s'étendant à partir de la coque et conformé pour être relié de façon amovible à une partie de liaison de la coque pour permettre de maintenir le gant de golf sur une main, le récepteur étant situé sur la partie de liaison.

5. Système conforme à la revendication 1,
dans lequel la partie de contact du dispositif indicateur de cadence est dégagée sur la partie de réception d'une main de sorte qu'elle puisse venir directement en contact avec la main d'un utilisateur lorsque cette main est logée dans la partie de réception d'une main.

6. Système conforme à la revendication 1,
dans lequel la partie de contact du dispositif indicateur de cadence est en contact avec la coque, cette partie de contact étant conformée pour émettre le rythme tactile à l'utilisateur au travers de la coque.

7. Système conforme à la revendication 1,
dans lequel l'interface de commande est au moins partiellement supportée par le boîtier.

8. Système conforme à la revendication 1,
dans lequel le dispositif électronique portatif reçoit une communication provenant d'un capteur RFID situé sur le club de golf pour détecter le club de golf utilisé.

9. Système conforme à la revendication 1,
dans lequel le dispositif électronique portatif utilise l'interface de commande pour permettre à l'utilisateur d'indiquer quel club est utilisé.
